Europäisches Patentamt

European Patent Office

Office européen des brevets

(11) Publication number: **0 316 254**
**A2**

## (12) EUROPEAN PATENT APPLICATION

(21) Application number: **88600010.8**

(22) Date of filing: **16.09.88**

(51) Int. Cl.⁴: **A 23 L 3/00**
**A 23 L 1/064, A 23 L 2/08**

(30) Priority: **28.09.87 GR 871493**

(43) Date of publication of application:
**17.05.89 Bulletin 89/20**

(84) Designated Contracting States:
**AT BE DE ES FR GB IT NL**

(71) Applicant: **VIORYL, CHEMICAL AND AGRICULTURAL INDUSTRY, SCIENTIFIC RESEARCH, S.A.**
**GR-145.64 Kifisia (GR)**

(72) Inventor: **Koutsilieris, Ilias**
**55 Aghiou Ioannou Street**
**153.42 Aghia Paraskeyi (GR)**

The title of the invention has been amended (Guidelines for Examination in the EPO, A-III, 7.3).

(54) **Food processing.**

(57) A process for manufacturing jams,marmelades,jellies,cakes,pastries,creams, puddings,crepes,fritters,frozen desserts,and the combination of the above with dairy products,such as yoghurt,ice-cream,desserts,in which:

i)The whole fruits are treated by pectinolytic and cellulolytic enzymes to enhance the flavour and to produce clarified juices which are then concentrated under vacuum at low temperature in an apparatus fitted with a column filled with inert solid support ($C_{18}$,carbon,Tenax,etc.),in order to trap the volatiles that in turn can be added along with the concentrated juices to the final products (marmelades,fruits,jams,jellies,etc.).

ii)The inert solid support washed with liquid carbon dioxide under pressure.

iii)The final products,in order to increase the percentage of low calories,also contain added solids:

a)Non metabolized β-oligo and poly saccharides,such as cellobiose,gentiobiose,etc.

b)Cellulosic enzymatic hydrolysates,or cellulose.

The application of non metabolized saccharides or enzymatic hydrolysates can be extended to other foods such as pastries,cakes,biscuits,chocolates, etc.

## Description

**A new method of food processing retaining all organoleptic and nutrient properties of controlled and dietetic value.**

The invention is referred to a new method of food processing aiming to retain all the organoleptic and nutrient properties,while the caloric value is controlled and regulated.

Despite the huge variety of industrially processed foodstuffs in industrial countries,are non existent some classes of foodstuffs for the production of which have been applied:

a)The recent technological development in the manufacturing process.

b)The recent attitudes of the dietetics.

A class of foodstuffs in demand by a substantial part of the consumers,are products prepared from fruits or fruit juices or clarified juices with the addition of mainly sugar,pectin and other additives,products as jams and marmelades,jellies,whole fruit preserves,cakes,puddings,pastries, baby foods,etc.,but and combinations of the above with dairy products,such as e.g. yoghurt or ice-cream which are added to the above products. The latter products are constantly gaining ground in the international market.

The products commonly available in the market,show the following basic disadvantages:

a) Loss and/or alteration of organoleptic characteristics (flavour,colour, vitamins,etc.),due to loss and/or alterating during manufacturing process.

b) Excessive calories uptake of high content of digestable carbohydrates (sucrose,glucose,starch,etc.).

The current methods applied on the fruit products manufacturing,result in the loss of the organoleptic characteristics of the fruits (prolonged heating under atmospheric or reduced pressure) with the alteration and/or decomposition or the diminution of the mixture of the flavour compounds which are responsible for the characteristic composition and particular flavour of each fruit.

The human sensation of taste,as known, can sense and distinguish mainly between four categories of compounds:sweet,sour,bitter and salty. The other characteristics which contribute to the distinct character and differentiate the various foodstuffs are a result of the odoriferous characteristics of these stuffs. Good cookery is notable by the successful blending of the flavour compounds of various foodstuffs and spices which have intense flavour,such as (e.g. clove,cinnamon,nutmeg,celery,garlic,onion, bay leaves,rosemary,basil,fennel,anise,cummin,etc.).

The specific flavour of the natural products is due,as it is known,to a combination in each case to a large number of volatile organic components (more than 200).The loss of one or more of these components results to the complete disappearance of the organoleptic and distinct flavour character of the foodstuff, in the case e.g.of raspberry,the characteristic flavour of which areconsisting of more than 240 constituents (the total of which is not exceeding the 0.2-0.3 o/oo of the juice) the loss of a trace constituent, e.g. from the sulfur compounds (thiols,thiazoles, pyrazines,etc.) which are present in minute traces,results in the complete disappearance of the organoleptic characteristics. So, usually it is impossible for someone to identify exactly the product consumed. Under these circumstances,it is not surprising that for the majority of processed foodstuffs of this kind,the consumer,omitting to read the label specifying the product,does not have the ability of distinguishing whether is a jam of e.g. strawberry,raspberry,cherry or other.This is augmented by the fact that the conventional methods of food processing lead to the distruction of the natural colour of foodstuffs and in the majority of cases, of numerous trace compounds,as the heat-sensitive vitamins.

The currently accepted views on dietetics,it is known the problem which face industrially developed countries whose members calories uptake is excessive and far beyond their needs.

In these cases,except the consumption of glycerides,contributes significantly and the consumption of refined sugar by the consumer. In the above mentioned products (jams,etc.) the sugar of digestable carbohydrates content, in many cases,exceeds the 50% and these are regarded as foodstuffs of high caloric value and their consumption,together with the imbalanced nutrition and the living patterns of the modern society contributes to obesity,toothdecay from the childhood,diabetes and cardiovascular disease.

The low consumption of foodstuffs of high cellulose content and the uptake of basic foods in a highly refined form,such as e.g. bread and bakery ptoducts or pasta made of wheat whose wheatgerm and bran are eliminated or baby food having as main constituent starch of corn without germ, all these lead to disorders of the digestive and mainly of the intestinal systems and various other secondary diseases.

The current invention,as described,is aiming to restore these two disadvantages of the ordinary products of this type and specifically:

1)The preservation from alteration of the physical characteristics (flavour,colour,vitamins,etc.) of the fruits throughout the processing stages to the final product,thus to be identifiable as natural by the consumer, without the artificial addition of flavour,colour or preservatives.

2)The final product prepared will be of very low caloric value which could as well comprise and natural products of high cellulose content or cellulose degradation products and generally beta-saccharides.

For the accomplishment of the first,the following procedure was applied:

1) Concentration of the pulp or the fruit juice under high vacuum,so that temperature does not exceed the ambient (20-30°C).In certain cases of very sensitive fruits,the freeze-drying technique was applied at temperatures -10° to -15°C,whereas for other fruits atmospheric pressure was used. The vapour formed during the concentration were passed through special filters made of absorbing materials (active charcoal,Tenax,Poropak,reverse phase silica,etc.).These materials,as known,absorb selectively the volatile compounds to which the flavour is due,when,they do not absorb the water of the moisture.After their saturation the elution and the recovery of the volatile compounds was accomplished by extraction with supercritical ($CO_2$). The carbonic acid,as known,is a natural product used by all living organism.Its basic advantage has been,that as gas,it is easily and completely evaporated at the ambient temperature,after the recovery of the very volatile flavour compounds which were evaporated during the concentration stage of the whole fruit of the juice are thereafter re-added to the concentraded product.The final product,so,contains all the components at the natural proportions and thus maintains unaltered the whole of its organoleptic characteristics.

This procedure can proceed to the partial or almost total removal of the water or moisture content to obtain the dried product.

The concentration can be accomplished in a one-step or multi-step or thin layer systems. In these systems has been incorporated the set-up for the recovery of the volatile compounds and their reactivation.

2) The reduction of the caloric value can be achieved by using sweeting agent e.g.

  a) Fructose,used proportionally less than sucrose,because of its higher sweeting capacity.

  b) Aspartame.

  c) Other natural and harmless sweetening agents,such as thaumatine,stebioside,glycyrrhizin,etc.

In order to increase the content of solids of the final products (60-65 Brix),the following could be added:

-Cellulosic products flavourless and tasteless,or cellulose rich products (bran,wheat germ,corn germ,grinded rice-crust,etc.).

-Products not metabolized by the human body,such as,b-configuration,di, tri,tetra and oligosaccharides,as tetroses,pentoses,hexoses in pyran and furan form,irrespectively of the linkage position ($C_1,C_2,C_3,C_4,C_5,C_6$) such as cellobiose,lamiranose,gentobiose,etc. In this category must be added and products of the enzymatic hydrolysis of cellulose.

These compounds,as known,facilitate the function of the digestive system, adding as well inorganic trace elements and trace compounds (vitamins,etc.), which the contemporary diet has reduced or eliminated.

-The combination of the above.

In the case of baby food or foodstuffs where the caloric value is of no concern,can be used sucrose or isoglucose or a combination of the above sweeting agents a,b,c, and/or the above mentioned filling substitutes.

The final product with the addition of pectin and citric acid can be packed in air-tight plastic package in the dried form (moisture lower than 10%) with or without pasteurization or steilization,and to be diluted by the consumer with the suitable amount of water or in the usual gelatinous form.

An other form of the final product could be the usually available package of similar products as concerns in air-tight containers sterilized at 70-80°C.

The main advantages and the new elements of the present invention are the following:

  (1) The processing of the fruits it is accomplished by a method which does not alter the organoleptic character of the product,not even their volatile compounds,as described in page 4,are re-added in the final product, which is an innovation not applied,so far,resulting to a superior product which can be identified by its physical organoleptic characteristics and not only through the label description of the product.

  (2) The processing by the above method allows controlled caloric value with beneficiary effects to health (toothdecay,cardiovascular disease,diabetes,intestinal diseases,etc.)

  (3) The use of cellulose or cellulose degradation products or generally non digestable beta-saccharides,as substitudes of products like sucrose or dextrose,starch and others commonly used,but which are increasing the predisposition to disease.

Some characteristic but not limiting examples of application of the present invention are the following:

Example 1.

Strawberry juice for jams,desserts and yoghurts or ice-cream with enhanced typical strawberry flavour. 5 kgs of strawberries cold water washed,were cooled at 0°C for 1 to 2 hours.The fruits were smashed smoothly and then 0.5 o/oo of pectinolytic and cellulolytic enzymes were added (0.5 o/oo W/W of each).The smashed fruits were held for 12 hours at 360C to produce a liquified juice which contains also non hydrolyzed natural polymeric materials (pectines). The total final mixture was filtered or centrifuged to remove the whole of the solid materials (initial $n_D$ = 1,3565).Subsequently,the liquid was heated in a glass reactor fitted with a column which contains Tenax or $C_{18}$ reverse phase silica at 20°C under vacuum (5 BAR) for a few hours in order to eliminate 80% of the total water. (Final $n_D$ = 1,3950).

The column with the inert support was washed with a small amount of organic solvents (freon,carbon dioxide,etc.) or hot water and the washings were added to the concentrated juice. In this manner we can recuperate all the volatile components of the strawberry flavour.The final juice has a very pleasant fruity odour identical to the natural fruits.This juice can be added to jams,desserts,yoghurts and other foodstuffs to enhance the typical flavour of strawberries We can pasteurize,if it is necessary,at 66-72°C for 4-8 minutes without deleterious effect to the flavour.

Example 2.

Strawberry jams with enhanced typical flavour and good colour.In 600 grs of strawberries,200 grs of fructose was added with 9 grs of 160 BLUM gelatine and 4 grs of sodium citrate and 3.5 grs of citric acid.The mixture was heated in an autoclave at 70°C for 10 minutes. In the final product can be added aspartame as sweeting agent before cooling.The temperature of the addition of aspartame does not exceed the 50°C.During the cooling and at 35°C,the concentrate of Example 1 was added in a concentration of 1-5% W/W. The 820 grs of finally obtained jam possess a very pleasant fruity odour and the natural red colour of the strawberry fruits.

Example 3.

Low calories strawberry jams with enhanced flavour and good colour.They are produced under the same conditions as described in the Example 2, except that fructose was added in a quantity of 150 grs followed by 150 grs of cellobiose before cooking.

Example 4.

Low calories strawberry jams with a final desired concentration of solids 50% and with enhanced flavour and good colour. 300 grs of cellobiose was dissolved in 200 ml of hot water (50°C) and then 300 grs of fructose were added. Into the final mixture 1-3 kgs of washed strawberries were added, 10 grs of MRS peptin and 5 grs of citric acid.These quantities can be extended to 20 grs and 10 grs respectively.The total final mixture was cooked in an autoclave at 100°C for 10 minutes and then cooled.To enhance the typical strawberry flavour,the concentrated juice of strawberries as given in the Example 1 was added at 40°C.The final product containing about 50% of solids,has a very pleasant and fruity flavour,sweet taste and good colour.

Example 5.

Low calories marmelades or jams with a final concentration 50% of solids with enhanced flavour and colour.The same conditions as given in Example 4,except that the cellobiose and the water were substituted by 500 grs of liquid enzymatic hydrolyzates of cellulose which contain about 40% of water.

In all these examples (1,2,3,4 and 5) aspartame,glycyrrhizin can be added as sweeting agents in desired concentrations to improve the sweet taste of the final product.

Example 6.

Low calories pastries,cakes,pies,tartes and desserts. In order to produce "low calories foodstuffs" with high content of solids,we can substitute the total quantity of sucrose with its one third (weight value) by fructose,and balance the remaining two thirds by cellobiose,or cellulose hydrolysates.In preparation,whereupon sucrose is not required,to obtain low calories foodstuffs,we can substitute 50% of flour by cellobiose or dry enzymatic hydrolysates of cellulose.

Claims

1. The minimization of alterations of the organoleptic characteristics of foodstuffs (flavour),preservation of their colour and of their heat-sensitive compounds (such as e.g. vitamins) during their processing,which is achieved by processing of the products at temperatures lower than ambient or at the most ambient 20-30°C under vacuum.

2. The recovery and re-addition of these compounds present in the concentrate by methods which do not leave any traces of the extraction means or cause any transformation of their chemical character.

3. The use of harmless filling and sweeting agents reducing the caloric burden of the consumer,which helps the prevention of toothdecay and can be consumed by persons having health problems such as hyperglycaemia (diabets, etc.).obesity or cardiovasculars disease.

4. Avoidance of sterilization or pasteurization by using products in dry form (moisture less than 10%) offered in air-tight packages.

5. The combination of the above claims 1,2,3 and 4.